# EUROPEAN PATENT SPECIFICATION

(11) **EP 0 750 106 B1**
(45) Date of publication and mention of the grant of the patent: **30.08.2000**
(21) Application number: 96304345.0
(22) Date of filing: 10.06.1996
(51) Int. Cl.: F02G 5/04, F02B 29/04

(54) **Utilization of low-value heat in a supercharged thermal engine**
Benutzung geringwertiger Wärme in einer Wärmekraftmaschine
Utilisation de chaleur à faible valeur dans un moteur thermique

(30) Priority: 12.06.1995 FI 952869
(43) Date of publication of application: 27.12.1996
(73) Proprietor: Wärtsilä NSD OY AB, 00530 Helsinki (FI)
(72) Inventor: Hägglund, Thomas, 65100 Vaasa (FI)
(74) Representative: Newby, Martin John

(56) References cited:
- FR-A- 2 305 591
- GB-A- 2 033 017
- US-A- 3 439 657
- US-A- 5 415 147

## Description

This invention relates to a combustion engine plant according to the preamble of claim 1 for utilising low-value heat for improving the total efficiency rate of a supercharged thermal engine, such as a diesel engine. The invention also relates to a supercharged combustion engine arrangement and to a method of improving the efficiency of a combustion engine plant. The invention is particularly applicable to a power plant. In a power plant the engine produces mechanical energy at a substantially constant power level, and this allows a high degree of optimization of the operation of the engine. This is true also for the (main) engine of a ship.

It is known to use the thermal energy of heat flows of a combustion engine for preheating or heating purposes to drive auxiliary equipment. In such applications it is of advantage to recover thermal energy from high-temperature heat flows, such as exhaust gases or supercharged feed air. US-A-4182127 discloses the use of several different heat sources. EP-A-0636779 discloses the use of thermal energy recovered from the hot coolant of an engine, from exhaust gases and from supercharged feed air. The document mentions that a further, not specified, cooling of the supercharged air supplied to a combustion engine is necessary for lowering its temperature, but nothing is said about any utilisation of the heat recovered in this cooling process. This is because low-temperature heat of this kind of energy is normally considered to be "low-value heat", that is heat that is not worth being utilised and therefore is left unused. This is harmful to the total efficiency rate of the engine, because the temperature of the feed air remains disadvantageously high.

An object of the invention is to use the thermal energy available in low-value heat flows for improving the total efficiency rate of a combustion engine plant.

The object of the invention is obtained by a supercharged combustion engine unit as set forth in the ensuing claim 1. Because thermal energy is transferred to the feed air of a supercharged engine prior to passing the feed air through a turbocharger, or the like, the temperature of the air downstream of the turbocharger is higher than would be the case without such a heat transfer. Therefore, the thermal energy of the supercharged feed air is greater and can be used more effectively. Preheating of engine feed air according to the invention thus increases the amount of usable high-temperature heat or thermal energy. In this specification, the term "high-temperature" means a temperature higher than the low-value heat referred to and suitable for known heat utilisation purposes. Heat used for feed air preheating may be any low-value or waste heat, for example heat recovered from the same feed air downstream of the turbocharger. Its use for the purpose mentioned can only be of advantage to and increases the total efficiency of the engine since it decreases the temperature of the air fed into the engine to an extent that is not possible without applying the invention.

It may be convenient to improve the total efficiency rate of a primary engine according to the invention, by using thermal energy from a medium flow cooling a secondary engine, e.g. an electric generator, powered by the primary engine. In particular in high power applications, such medium flows contain substantial amounts of thermal energy. Similarly heat recovered from any cooling system of a combustion engine plant may be used for the same purpose. Heat exchangers are normally used for transferring thermal energy from one fluid flow to another and the most efficient heat transfer is provided by heat exchangers working in a contra-flow mode.

The best results with respect to the total efficiency rate are normally achieved when several different heat sources are jointly used for preheating the feed air.

The invention is in particular suitable for improving the total efficiency rate of a reciprocating internal combustion engine, for example a diesel engine. The diesel engine may be a conventional engine, an engine using heavy oil as fuel or a gas engine, possibly with spark ignition. It is of advantage that the thermal engine is large enough, having a power of at least 0.5 MW, preferably at least 5 MW.

When, in an arrangement according to the invention, high-temperature heat is taken from supercharged feed air, the aim should be that only a small amount of residual heat is left. It is recommended that the temperature of the residual heat should at the most be 85 °C, preferably at the most 70 °C.

High-temperature heat recovered from the supercharged feed air may advantageously be used in a district heating system or for other heating purposes. If the engine fuel is heavy oil, heat is also needed for fuel preheating. Another way of using high-temperature heat is to convert it to electricity by means of a steam turbine.

Normally, the feed air comprises atmospheric air the temperature of which may vary considerably due to atmospheric conditions. The use of low-value heat is only possible when its temperature is higher than the temperature of the ambient air. In practice this means that the usable low-value heat temperature should be higher than 40 °C.

An embodiment of the invention will now be described, by way of example only, with particular reference to the accompanying drawing, in which:
Figure 1 is a flow chart of a combustion engine power plant according to the invention, and
Figure 2 shows schematic typical temperature curves for the power plant of Figure 1.

In the drawing, 1 indicates a combustion engine in the form of a diesel engine provided with a turbocharger 2a, 2b for charging feed air for the engine which is delivered through a pipe 3. Between the charger 2b and the engine 1, the feed air passes through a pipe 4 to a heat exchanger 5, which may include one or several heat-exchanging steps and, preferably, works in the contra-flow mode, as shown by arrows 16. The heat exchanger 5 recovers for subsequent use high-temperature heat from the feed air that has been considerably heated as a result of the pressure rise provided by the charger 2b. The feed air is passed from the heat exchanger 5 to a cooler 6 which also works in the contra-flow mode and which delivers cooled, supercharged feed air, having a temperature of about 50°C, to the diesel engine 1. The engine 1 drives a generator 7 which generates electricity. Conventional heat recovery circuits for using the heat recovered from the exhaust gases of the engine are not shown in the drawing.

Liquid-containing pipes 8 and 9 connect the cooler 6 to a heat exchanger 10, working in the contra-flow mode, for transferring low-value heat from the cooler 6 to the feed air to be delivered to the charger 2b, thereby increasing the temperature of the feed air. A circulation pump 11 provides a desired rate of liquid flow in the pipes 8 and 9. The temperature of the unprocessed- feed air can vary significantly. If the engine operates in arctic conditions, the feed air temperature is typically the same, or almost the same, as the temperature of the ambient air. Because of freezing or humidity problems, it is sometimes necessary to preheat the air or to treat it in some other way. In a warm climate, the temperature of the feed air may be + 30°C or even more. The temperature of the liquid contained in the pipe 9 is normally from 20 to 30°C, but it may vary considerably in different applications and under different atmospheric conditions. The temperature of the liquid entering the cooler from the tube 9 usually rises by from 2 to 20°C, but it may rise even more, especially if the rate of flow is low and/or if the cooler works very efficiently as a heat exchanger.

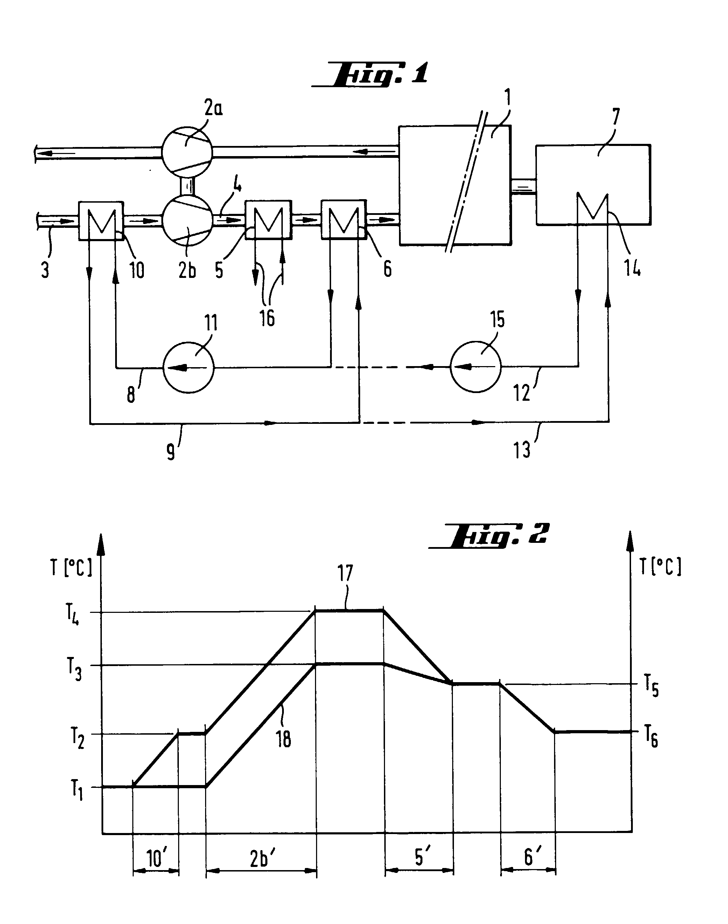

Figure 1 also shows a heat exchanger comprising a liquid cooler 14 connected to the cooling system of the generator 7. This cooler 14 may be connected to the described heat utilisation arrangement via pipes 12 and 13. The coolers 14 and 6 may be connected in series or in parallel. By suitable calculations it is possible to analyse which connection mode is more advantageous in each case. If necessary, a circulation pump 15 may be provided to ensure an adequate liquid flow rate through the cooler 14 and to enable the flow rate through the coolers 14 and 6 to be adapted to a suitable value.

It is feasible to use, for the purpose described, any available low-value heat flow either alone or jointly with some other heat flow for heating the feed air upstream of the supercharger, thereby improving, according to the invention, the total efficiency rate of the arrangement.

In Figure 2 the upper curve 17 shows the temperature of the feed air of a diesel engine in an arrangement according to the invention and the lower curve 18 shows the corresponding temperatures when the invention is not applied. The section 10' refers to the function of the heat exchanger 10, the section 2b' to the function of the turbocharger 2b, the section 5' to the function of the heat exchanger 5 and the section 6' to the function of the cooler 6. T₁ refers to the temperature of the feed air upstream of the heat exchanger 10. The temperature T₁ is normally less than 30°C, even substantialy less than 0°C in arctic conditions. In an arrangement according to the invention, the feed air is heated in the heat exchanger 10 to the temperature T₂, which is about 40°C, but may also be higher. Without an arrangement according to the invention, the feed air would enter the charger 2b at the temperature T₁ and would reach the temperature T₃, which is usually from 200 to 230°C, downstream of the charger 2b. When the invention is applied, the air is heated by the charger 2b from the temperature T₂ to the temperature T₄, which is clearly higher than T₃ and is normally above 240°C. In the heat exchanger 5, high-temperature heat is recovered for utilisation.

The temperature T₅, usually from 80 to 90°C, is the temperature of the compressed feed air downstream of the heat exchanger 5, both when applying and not applying the invention. This means that, in an arrangement according to the invention, significantly more high-temperature heat or thermal energy for utilisation can be recovered in the heat exchanger 5 than when the invention is not applied. In the cooler 6, the temperature of the compressed feed air decreases to the temperature T₆, which is approximately the same when applying the invention and when not. Normally, the temperature T₆ is at the most about 50°C.

It should be noted that Figure 2 only refers to one application of the invention. Adjustment of the functional effectiveness of the cooler 6 and/or the heat exchanger 5 might give a more favourable result. The high-temperature heat or thermal energy recovered from the heat exchanger 5 is suitable for providing district heating, for preheating heavy oil, for steam generation and/or for other similar usages.

The invention is not to be considered as being limited to the embodiments illustrated but several variations thereof are feasible within the scope of any of the following claims.

## Claims

1. A combustion engine unit including a combustion engine (1), a supercharger (2b), air feed means comprising first air feeding means (3) for supplying air to the supercharger (2b) and second air feeding means (4) for supplying supercharged air from the supercharger to the combustion engine (1), and heat recovery means, characterised in that the heat recovery means includes transfer means (6,8,9,10) for transferring low-value heat recoverable from at least one heat source to the first air feeding means (3) thereby increasing the temperature of the feed air entering the supercharger (2b) for providing greater amounts of high-temperature heat recoverable from the feed air compressed in the supercharger (2b).

2. A combustion engine plant including a combustion engine unit as claimed in claim 1 and heat source means, the said heat transfer means transferring low-value heat recovered from the heat source means to the first air feeding means.

3. A plant according to claim 2, characterised in that the heat source means comprises residual heat present in the feed air in the second air feeding means (4) after it has been compressed in said supercharger (2b) and after the high-temperature heat contained in the compressed feed air has been recovered for utility use.

4. A plant according to claim 2 or 3, characterised in that it includes a machine (7) driven by the engine (1) and heat exchange medium flow means (12-15) for cooling the machine (7) and in that the heat source means comprises the heat exchange medium of the heat exchange medium flow means after extraction of heat from the machine (7).

5. A plant according to any of claims 2 to 4, characterised in that the heat source means comprises heat recovered from any cooling system of the engine (1).

6. A plant according to any of claims 2 to 5, characterised in that the heat source means comprises a plurality of separate heat sources.

7. A plant according to any of claims 2 to 6, characterised in that the engine (1) is a reciprocating internal combustion engine, preferably a diesel engine (1).

8. A plant according to any of claims 2 to 7, characterised in that the power of the engine (1) is at least 0.5 MW, preferably at least 5 MW.

9. A plant according to any of claims 2 to 8, characterised in that the temperature of the residual low-value heat of the compressed feed air is at the most 85°C, preferably at the most 70°C.

10. A plant according to any of claims 2 to 9, characterised in that the temperature of the low-value heat is higher than 40°C.

11. A method of improving the efficiency of a combustion engine plant comprising supercharging air prior to feeding it to the combustion engine, characterised in that the feed air is preheated before it is supercharged using heat from at least one heat source of the combustion engine plant.

## Patentansprüche

1. Brennkraftmaschineneinheit mit einer Brennkraftmaschine (1), einem Auflader (2b), einer Luftzuführeinrichtung, welche ein erstes Luftzuführmittel (3) zum Zuführen von Luft zum Auflader (2b) und welche ein zweites Luftzuführmittel (4) zum Zuführen aufgeladener Luft vom Auflader zur Brennkraftmaschine (1) aufweist, und mit einem Wärmewiedergewinnungsmittel,
dadurch gekennzeichnet, dass das Wärmewiedergewinnungsmittel Übertragungsmittel (6, 8, 9, 10) zum Übertragen wiedergewinnbarer geringwertiger Wärme von zumindest einer Wärmequelle zum ersten Luftzuführmittel (3) aufweist, um dadurch die Temperatur der in den Auflader (2b) eintretenden Zuluft zu erhöhen, um größere Mengen aus im Auflader (2b) komprimierter Zuluft wiedergewinnbarer Wärme höherer Temperatur bereitzustellen.

2. Brennkraftmaschinenanlage mit einer Brennkraftmaschineneinheit gemäß Anspruch 1 und mit einem Wärmequellenmittel, wobei das Wärmeübertragungsmittel wiedergewonnene geringwertige Wärme aus dem Wärmequellenmittel zum ersten Luftzuführmittel überträgt.

3. Anlage nach Anspruch 2,
dadurch gekennzeichnet, dass das Wärmequellenmittel Restwärme aufweist, welche in der Zuluft in dem zweiten Luftzuführmittel (4) vorhanden ist, nachdem sie im Auflader (2b) komprimiert wurde und nachdem die in der komprimierten Zuluft enthaltene Wärme hoher Temperatur zur Verwendung wiedergewonnen wurde.

4. Anlage nach einem der Ansprüche 2 oder 3,
dadurch gekennzeichnet, dass eine durch die Brennkraftmaschine (1) angetriebene Maschine (7) und Wärmeaustauschmediumströmungsmittel (12-15) zum Kühlen der Maschine (7) vorgesehen sind und dass das Wärmequellenmittel das Wärmeaustauschmedium der Wärmeaustauschmediumströmungsmittel nach Entnahme von Wärme aus der Maschine (7) aufweist.

5. Anlage nach einem der Ansprüche 2 bis 4,
dadurch gekennzeichnet, dass das Wärmequellenmittel aus irgendeinem Kühlsystem der Brennkraftmaschine (1) wiedergewonnene Wärme aufweist.

6. Anlage nach einem der Ansprüche 2 bis 5,
dadurch gekennzeichnet, dass das Wärmequellenmittel eine Mehrzahl separater Wärmequellen aufweist.

7. Anlage nach einem der Ansprüche 2 bis 6,
dadurch gekennzeichnet, dass die Brennkraftmaschine (1) als sich hin- und herbewegender Verbrennungsmotor, vorzugsweise als Dieselmotor (1), ausgebildet, ist.

8. Anlage nach einem der Ansprüche 2 bis 7,
dadurch gekennzeichnet, dass die Leistung der Brennkraftmaschine (1) zumindest 0,5 MW, vorzugsweise mindestens 5 MW, beträgt.

9. Anlage nach einem der Ansprüche 2 bis 8,
dadurch gekennzeichnet, dass die Temperatur der geringwertigen Restwärme der komprimierten Zuführluft höchstens 85°C, vorzugsweise höchstens 70°C, beträgt.

10. Anlage nach einem der Ansprüche 2 bis 9,
dadurch gekennzeichnet, dass die Temperatur der geringwertigen Wärme höher als 40°C ist.

11. Verfahren zum Verbessern der Wirkung einer Brennkraftmaschinenanlage mit vor dem Zuführen zur Brennkraftmaschine geladener Luft,
dadurch gekennzeichnet, dass die Zuluft unter Verwendung von Wärme aus zumindest einer Wärmequelle der Brennkraftmaschinenanlage vor dem Aufladen vorgeheizt wird.

## Revendications

1. Ensemble de moteur à combustion interne comprenant un moteur à combustion interne (1), un compresseur (2b), un moyen d'alimentation d'air comprenant un premier moyen d'alimentation d'air (3) destiné à fournir de l'air au compresseur (2b) et un second moyen d'alimentation d'air (4) destiné à fournir de l'air suralimenté provenant du compresseur, au moteur à combustion interne (1) et un moyen de récupération de chaleur, caractérisé en ce que le moyen de récupération de chaleur comprend un moyen de transfert (6, 8, 9, 10) destiné à transférer de la chaleur à faible valeur récupérable à partir d'au moins une source de chaleur, au premier moyen d'alimentation d'air (3), en augmentant ainsi la température de l'air d'alimentation entrant dans le compresseur (2b) afin de fournir des quantités supérieures de chaleur à haute température récupérable à partir de l'air d'alimentation comprimé dans le compresseur (2b).

2. Installation à moteur à combustion interne comprenant un ensemble de moteur à combustion interne selon la revendication 1 et un moyen de source de chaleur, ledit moyen de transfert de chaleur transférant une chaleur à faible valeur récupérée à partir du moyen de source de chaleur vers le premier moyen d'alimentation d'air.

3. Installation selon la revendication 2, caractérisée en ce que le moyen de source de chaleur comprend de la chaleur résiduelle présente dans l'air d'alimentation dans le second moyen d'alimentation d'air (4) après qu'il ait été comprimé dans ledit compresseur (2b) et après que la chaleur à haute température contenue dans l'air d'alimentation comprimé ait été récupérée en vue d'une utilisation utilitaire.

4. Installation selon la revendication 2 ou 3, caractérisée en ce qu'elle comprend une machine (7) entraînée par le moteur (1) et un moyen de circulation de milieu d'échange de chaleur (12 à 15) destiné à refroidir la machine (7) et en ce que le moyen de source de chaleur comprend le milieu d'échange de chaleur du moyen de circulation de milieu d'échange de chaleur après extraction de la chaleur de la machine (7).

5. Installation selon l'une quelconque des revendications 2 à 4, caractérisée en ce que le moyen de source de chaleur comprend la chaleur récupérée à partir d'un système de refroidissement quelconque du moteur (1).

6. Installation selon l'une quelconque des revendications 2 à 5, caractérisée en ce que le moyen de source de chaleur comprend un certain nombre de sources de chaleur séparées.

7. Installation selon l'une quelconque des revendications 2 à 6, caractérisée en ce que le moteur (1) est un moteur à combustion interne alternatif, de préférence un moteur diesel (1).

8. Installation selon l'une quelconque des revendications 2 à 7, caractérisée en ce que la puissance du moteur (1) est d'au moins 0,5 MW, de préférence d'au moins 5 MW.

9. Installation selon l'une quelconque des revendications 2 à 8, caractérisée en ce que la température de chaleur à faible valeur résiduelle de l'air d'alimentation comprimé est au plus de 85° C, de préférence au plus de 70° C.

10. Installation selon l'une quelconque des revendications 2 à 9, caractérisée en ce que la température de la chaleur à faible valeur est plus élevée que 40° C.

11. Procédé d'amélioration du rendement d'une installation à moteur à combustion interne comprenant une suralimentation de l'air avant son introduction dans le moteur à combustion interne, caractérisé en ce que l'air d'alimentation est préchauffé avant qu'il soit suralimenté en utilisant la chaleur provenant d'au moins une source de chaleur de l'installation à moteur à combustion interne.
